# EUROPEAN PATENT APPLICATION

(11) **EP 4 542 028 A1**
(43) Date of publication of application: **23.04.2025**
(21) Application number: 23204239.0
(22) Date of filing: 18.10.2023
(51) Int. Cl.: F03D 13/20, F03D 80/80

(54) **TOWER SEGMENT WITH HOLDING STRUCTURE FOR A WIND TURBINE AND METHOD FOR MANUFACTURING A TOWER**

(71) Applicant: Siemens Gamesa Renewable Energy A/S, 7330 Brande (DK)
(72) Inventor: Chopra, Rohit, 145001 Punjab (IN); Puri, Umesh, 411019 Pune (IN); Rane, Mallesh, 560100 Bangalore (IN)
(74) Representative: SGRE-Association

(57) **Abstract**

The invention relates to a tower segment (1) for a tower of a wind turbine, comprising a tower segment shell (5) for shielding an inner chamber (6) of the tower segment (1) from an environment of the tower and a horizontally arranged first holding structure (9). The first holding structure (9) has a first longitudinal end section (11) and a second longitudinal end section (12), wherein the first longitudinal end section (11) is fixedly attached to a first shell section (13) of the tower segment shell (5), wherein the second longitudinal end section (12) is moveably arranged at a second shell section (14) of the tower segment shell (5). The invention further relates to a method for manufacturing a tower of a wind turbine.

## Description

The present invention relates to a tower segment for a tower of a wind turbine. The invention also relates to a method for manufacturing a tower of a wind turbine.

Common wind turbines comprise a nacelle and a tower for carrying the nacelle. Since the towers for wind turbines, for offshore and for onshore deployment, can have a height of more than 100 m, the towers are usually transported from a manufacturing site to a deployment site in a segmented state. Within this application, elements of a segmented tower are denoted as "tower segments".

Besides carrying the nacelle, together with other components of the wind turbine, such as wind turbine blades, a hub, a rotor, a gearbox, a generator or the like, a function of the tower is to hold a ladder, electric parts and a yaw cable loop. In some towers, a dampening device, also denoted as "damper" or, in a particular specification, "full size damper" in this application, is provided to improve overall stability of the tower, especially with respect to the natural resonance of the tower of the wind turbine.

For holding the ladder and the cables, a holding structure is provided within the tower. In general, tower segments are transported to the deployment site in a blank state, separate from the internal parts, like the holding structure, the ladder, cables and electric parts. At the deployment site, the tower segments are stacked up and fixed together to constitute the tower. This is usually executed by using a crane. During this process, the internal parts are assembled within the tower segments.

The assembly process of the internal parts can be very time-consuming and can further increase the time necessary for stacking up the tower segments. However, since the usage of a crane is relatively expensive, the costs for erecting the wind turbine at the deployment site are relatively high. With an increasing number of internal parts, the assembly costs can further rise disproportionately.

It is therefore the object of the present invention to eliminate or at least partially eliminate the disadvantages described above in the case of a tower of a wind turbine. In particular, it is the object of the present invention to create a tower segment for a tower of a wind turbine and a method for manufacturing a tower of a wind turbine, which provide for a reduced assembly time at the deployment site in a simple and inexpensive manner.

The above object is achieved by the claims. Accordingly, the problem is solved by a tower segment for a tower of a wind turbine with the features of the independent claim 1 and by a method for manufacturing a tower of a wind turbine with the features of the subordinate claim 12. Further features and details of the invention emerge from the subclaims, the description and the drawings. Features and details that are described in connection with the tower segment according to the invention naturally also apply in connection with the method according to the invention and vice versa, so that with regard to the disclosure of the individual aspects of the invention, reference is or can always be made to each other.

According to a first aspect of the invention, the object is achieved by a tower segment for a tower of a wind turbine. The tower segment comprises a segment top end, a segment bottom end and a segment intermediate section between the segment top end and the segment bottom end. The tower segment further comprises a tower segment shell in the segment intermediate section for shielding an inner chamber of the tower segment from an environment of the tower. The tower segment further comprises a horizontally arranged first holding structure. According to the invention, the first holding structure has a first longitudinal end section and a second longitudinal end section, wherein the first longitudinal end section is fixedly attached to a first shell section of the tower segment shell, wherein the second longitudinal end section is moveably arranged at a second shell section of the tower segment shell.

Optionally, the tower segment comprises a top attachment means, preferably a top flange, at the segment top end and a bottom attachment means, preferably a bottom flange, at the segment bottom end.

Further, the tower segment optionally comprises a wire harness, arranged at the first holding structure such that the first holding structure guides the wire harness, wherein the wire harness extends between the segment top end and the segment bottom end.

The tower segment is preferably configured for being stacked onto another element of the tower of the wind turbine, e.g., a foundation or another tower element. By stacking a plurality of tower elements onto each other, e.g. in a way that the top flange of a lower tower segment is adjacent to or in contact with a bottom flange of the adjacent upper tower segment, and by mutually fixing adjacent tower elements, e.g., by nuts and bolts or the like, the tower for the wind turbine can be assembled. The distance between the segment top end and the segment bottom end is denoted as *"vertical length"* of the tower segment in this application. Preferably, the segment intermediate section constitutes the vertical length of the tower segment.

The tower segment shell preferably constitutes an outer wall of the tower segment. It is preferred that the tower segment shell also constitutes an inner wall of the tower segment.

The tower segment shell can constitute a single wall or a multi-wall with at least two wall layers, e.g., separated by a cavity, spacers or the like. Preferably, the tower segment has a round or at least substantially round cross-section. A diameter of the segment bottom end can be smaller than a diameter of the segment top end. Thus, the tower can have a tapering from the bottom to the top.

The tower segment shell preferably circumferentially surrounds the inner chamber of the tower segment. In the inner chamber, the inner components of the wind turbine tower are located, such as the first holding structure, the wire harness, a ladder, electrical parts or the like. Thus, the inner components are protected from environmental influences, such as wind, rain or the like.

The wire harness can comprise one or more low voltage cables and/or one or more high voltage cables. The wire harness is attached to the first holding structure in a way that it is vertically secured from falling down from the tower segment.

The first holding structure is arranged inside the inner chamber. The first holding structure has the first longitudinal end section and the second longitudinal end section. Moreover, the first holding structure is preferably horizontally arranged between the opposing inner walls, e.g., of the tower segment shell, of the tower segment. A surface of the first holding structure is preferably manufactured by hot dip galvanization or the like.

It is preferred that the first holding structure comprises a long beam, extending from the first longitudinal end to the second longitudinal end. Preferably, the first holding structure comprises two or more parallel or substantially parallel arranged long beams. Preferably, adjacent long beams are interconnected by a plurality of shorter crossbars. Preferably, the first holding structure is forming a ladder-like structure. It is further preferred that other electrical devices of the wind turbine are attached to the first holding structure.

According to the invention, the first longitudinal end section is fixedly attached to a first shell section of the tower segment shell, wherein the second longitudinal end section is moveably arranged at the second shell section of the tower segment shell. The first longitudinal end section can be fixed to the first shell section directly or indirectly, e.g., by a mounting device, attached to the first shell section. It is preferred that the attachment of the first longitudinal end section to the first shell section is configured such that a relative movement of the first holding structure to the first shell section is prevented. Further preferred, the second longitudinal end section is arranged at the second shell section in a way that a relative movement of the second holding structure to the second shell section is allowed. The allowed relative movement is preferably along a longitudinal axis of the first holding structure. Moreover, it is preferred that the second longitudinal end section is arranged at a contact face at the second shell section to secure the second longitudinal end section in a vertical position relative to the second shell section.

A tower segment according to the invention has the advantage over conventional tower segments that in a simple and inexpensive way, a plurality of internal components of the wind turbine tower can be provided in a preassembled state with the tower segment. At the deployment site, the tower segments just need to be stacked to pile up the wind turbine tower and fixed together, preferably including the step of electrically connecting the wire harnesses of adjacent tower segments. This is much less time consuming than the assembly of conventional tower segments, which requires the arrangement of the wire harness inside the tower segments after piling up to constitute the tower. By allowing a relative movement of the second longitudinal end section to the second shell section, ovalization of the tower segment during transport and storage can occur without damaging the first holding structure.

According to a preferred further development of the invention, a tower segment can provide that a plurality of first holding structures is arranged inside the inner chamber, vertically spaced apart from each other. Preferably, two or more of the first holding structures have the same orientation. Further preferred, all first holding structures of the tower segment have the same orientation. By providing the first holding structures with the same orientation, the arrangement of the inner components of the tower, such as the wire harness, the ladder or the like, can be improved. The wire harness is preferably fixed to two or more of the first holding structures of the tower segment. Preferably, the wire harness is fixed to all of the first holding structures of the tower segment. This has the advantage that in a simple and inexpensive way, an easy and secure arrangement of the wire harness and further inner components of the tower inside the tower segment can be achieved.

It is preferred, according to the invention, that the first shell section and the second shell section are arranged at opposite sides of the tower segment shell. Further preferred, the first holding structure crosses a longitudinal axis of the tower segment. Thus, the horizontal length of the first holding structure can be the same or slightly less than the diameter of the inner chamber. This has the advantage that in a simple and inexpensive way, an easy and secure arrangement of the wire harness and further inner components of the tower inside the tower segment can be achieved.

More preferred, the second longitudinal end section is vertically retained at an abutment device at the second shell section. The abutment device can be configured as a flange, protruding inside the inner chamber of the tower segment. The abutment device can have a flat upper surface, configured for providing a support surface for the second longitudinal end section. Alternatively, the upper surface can have a v-shape or concave shape to prevent the second longitudinal end section from sliding off the abutment device. The abutment device can be made of metal, a polyoxymethylene thermoplastic material or the like. This has the advantage that in a simple and inexpensive way, a secure arrangement of the first holding structure inside the inner chamber can be improved. Moreover, the stability of the first holding structure can be maintained even during ovalization of the tower segment.

In a particularly preferred embodiment of the invention, the abutment device is fixedly attached to the tower segment shell at the second shell section. The abutment device can be attached to the tower segment by bolts, nuts, welds, rivets, resin, glue, especially thermoplastic glue, or the like. This has the advantage that in a simple and inexpensive way, the secure arrangement of the first holding structure inside the inner chamber can be further improved. Moreover, the stability of the first holding structure can be maintained even during ovalization of the tower segment.

Preferably, the second longitudinal end section is horizontally guided at the abutment device. A horizontal guiding means that a relative movement in circumferential direction of the tower segment is prevented by the abutment device in cooperation with the second longitudinal end section. Preferably, a relative movement between the first holding structure and the tower segment shell in a vertical direction is prevented by the abutment device in cooperation with the second longitudinal end section as well. Preferably, the guidance is a linear guidance. Such guidance can be provided by a rail system or the like. This has the advantage that in a simple and inexpensive way, the secure arrangement of the first holding structure inside the inner chamber can be further improved. Moreover, the stability of the first holding structure can be maintained even during ovalization of the tower segment.

According to a preferred embodiment of the invention, a full size damping device is attached to the tower segment shell in a section above the first holding structure, wherein a second holding structure is horizontally arranged inside the full size damping device, wherein the wire harness is arranged at the second holding structure. Preferably, the full size damping device is arranged inside the inner chamber of the tower segment shell. A full size damping device is already known from prior art wind turbine applications. The full size damping device is configured for dampening vibrations of the tower to avoid resonance oscillation of the tower, especially at an early stage with comparatively low amplitudes. The full size damping device has an inner free space. Preferably, two, three or more full size damping devices are arranged inside the inner chamber. The second holding structure is arranged inside the inner free space of the full size damping device. Preferably, in two or more, e.g., in all, full size damping devices, a second holding structure is arranged. The second holding structure can be basically configured similar to the first holding structure. However, since a diameter of the inner free space of the full size damping device is less than the diameter of the inner chamber of the tower segment shell, the second holding structure is shorter than the first holding structure. At least one end section of the second holding structure is fixedly attached to the full size damper. The other end section of the second holding structure can be arranged at the full size damper similar to the arrangement of the second longitudinal section of the first holding structure at the second shell section. Preferably, the wire harness is fixed to the second holding structure. This has the advantage that in a simple and inexpensive way, the stability of the tower segment and the tower is further increased. Thus, the transportability and manageability of the tower segment is improved.

Particularly preferred, both opposite longitudinal end sections of the second holding structure are fixedly attached to the full size damping device. By these means, the attachment of the second holding structure to the full size damping device differs from the attachment of the first holding structure to the tower segment shell. For the second holding structure, both longitudinal end sections are fixedly attached to the full size damping device. Since the full size damping device has a comparatively stiff design, ovalization of the full size damping device does not occur or at least does not occur to the same extent as ovalization of the tower segment shell spaced apart from the full size damping device. This has the advantage that in a simple and inexpensive way, the stability of the arrangement of the second holding structure at the full size damping device is further increased.

It is preferred according to the invention that a ladder segment is supported by the first holding structure, wherein the ladder segment extends between the segment top end and the segment bottom end. The ladder segment is configured for constituting a continuous ladder though the tower in cooperation with other ladder segments of other tower segments of the tower. Preferably, the ladder is also supported by the second holding structure. Further preferred, two ladder segments are arranged spaced apart inside the tower segment, both supported by the first holding structure or the plurality of first holding structures and, preferably, by the second holding structure or the plurality of second holding structures. Thus, a tower with a service ladder and a climbing ladder can be provided. This has the advantage that in a simple and inexpensive way, the assembly effort at the deployment site of the wind turbine can be further reduced.

According to a second aspect of the invention, the object is achieved by a method for manufacturing a tower of a wind turbine. The method comprises:
- providing at least one tower segment according to the invention, and
- stacking and joining the at least one tower segment of the invention with at least one additional tower segment.

Preferably, the plurality of tower segments according to the invention is provided at a first location. Preferably, the first location is a workshop or factory for manufacturing the tower segments. Preferably, the tower segments are manufactured at the first location. Preferably, the manufacturing of the tower segments comprises the assembly of the wire harness to the first holding structure and, if applicable, the second holding structure. Further preferred, the manufacturing of the tower segments comprises the assembly of the ladder segments to the first holding structure and, if applicable, the second holding structure. Furthermore, the manufacturing of the tower segments can comprise attaching the first holding structure to the tower segment shell and/or the second holding structure to the full size damping device, if applicable. Moreover, the providing of the tower segments can further comprise the manufacturing of the tower segment shell.

The plurality of tower segments may then be transported from the first location to a second location by a transport device, wherein the second location is different from the first location. Preferably, the second location is the deployment site of the wind turbine. The second location or deployment side can be many kilometers away from the first location or the manufacturing site. The transport of the tower segments can be performed by a trailer pulled by a truck, a vessel or the like. The handling of the tower segments at the first location and/or the second location can be performed by a crane or the like.

At the second location, the tower segments are piled up coaxially and mutually fixed together, e.g., by nuts and bolts. The stacking of the tower segments is preferably performed in a way that the tower segments have a predetermined mutual orientation. Thus, adjacent ends of the wire harnesses of adjacent tower segments are arranged next to each other. Furthermore, ladder segments of adjacent tower segments are mutually aligned to form a continuous ladder inside the tower.

Finally, the wire harnesses of the stacked tower segments may be electrically coupled. For this purpose, adjacent ends of the wire harnesses of adjacent tower segments are electrically connected together, e.g., by electrical plugs, electrical connector boxes or the like. Thus, a continuous wire harness through the tower is constituted. This wire harness can be configured for transmitting electrical energy, generated from the generator of the wind turbine. Moreover, the wire harness can be configured for transmitting electrical signals, such as steering signals, sensor signals or the like, for operating the wind turbine.

The method for manufacturing a tower of a wind turbine according to the invention has all the advantages that have already been described for a tower segment according to the first aspect of the invention. Accordingly, the method according to the invention has the advantage over conventional methods for manufacturing a tower of a wind turbine that in a simple and inexpensive way, a plurality of internal components of the wind turbine tower is provided in a preassembled state with the tower segment, preferably at the first location, e.g., the workshop or factory. At the second location, namely the deployment site, the tower segments may just be stacked to pile up the wind turbine tower and fixed together, wherein the wire harnesses of adjacent tower segments are electrically connected. This is much less time consuming than the assembly of conventional tower segments, which requires the arrangement of the wire harness inside the tower segments after piling up to constitute the tower. By allowing a relative movement of the second longitudinal end section to the second shell section, ovalization of the tower segment during transport and storage can occur without damaging the first holding structure.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
- Figure 1: shows a schematic perspective view of a tower segment according to a preferred embodiment of the invention,
- Figure 2: shows a schematic sectional view of the tower segment of fig. 1,
- Figure 3: shows a schematic top view of a full size dampening device of fig. 1,
- Figure 4: shows a schematic perspective view of the full size dampening device of fig. 1,
- Figure 5: shows a schematic top view of a first holding structure of fig. 1, and
- Figure 6: shows a preferred embodiment of the method according to the invention in a schematic process chart.

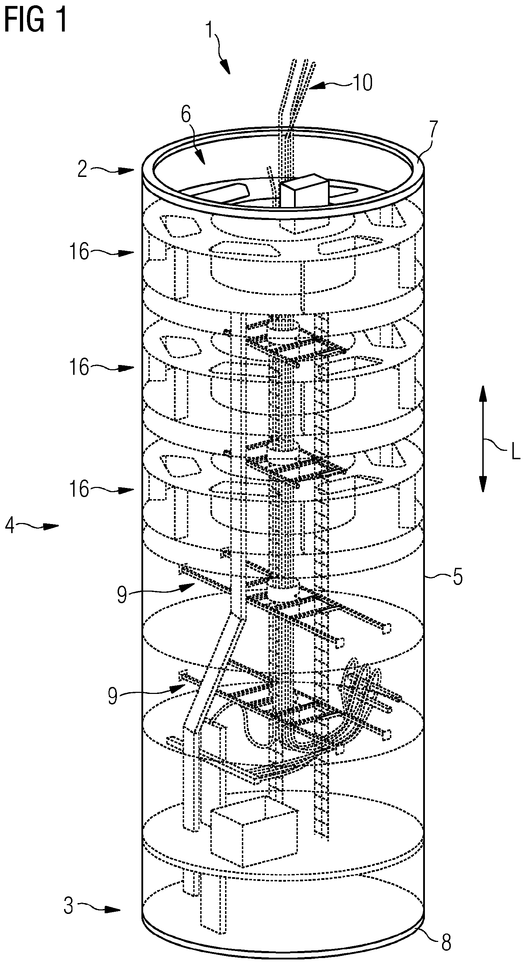

Elements with the same function and effectiveness are denoted each in figures 1 - 6 with the same reference numbers.

In fig. 1, a tower segment 1 according to a preferred embodiment of the invention is shown in a schematic perspective view.

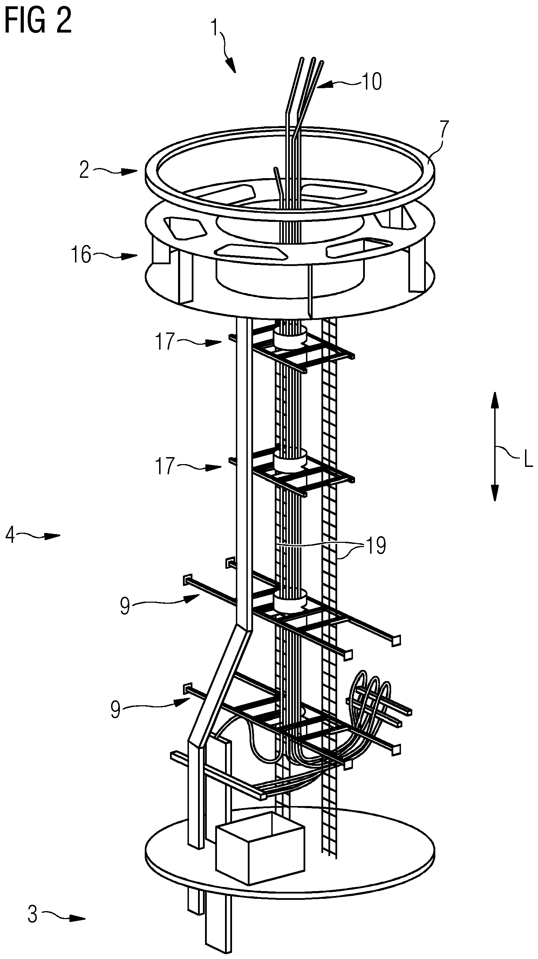

Fig. 2 shows the tower segment 1 of fig. 1 in a schematic sectional view.

The tower segment 1 comprises a segment top end 2, a segment bottom end 3 and a segment intermediate section 4. The segment intermediate section 4 is arranged between the segment top end 2 and the segment bottom end 3. In the segment intermediate section 4, the tower segment 1 comprises a tower segment shell 5. The tower segment shell 5 has a hollow-cylindrical shape, encompassing an inner chamber 6. At the segment top end 2, a ring shaped top flange 7 is arranged. At the segment bottom end 3, a ring shaped bottom flange 8 is arranged.

In an upper part of the segment intermediate section 4, three full size damping devices 16 are arranged, mutually spaced apart in a longitudinal direction L of the tower segment 1. In each full size damping device 16, a horizontally arranged second holding structure 17 is fixed to opposite sections of an inner wall of the respective full size damping device 16.

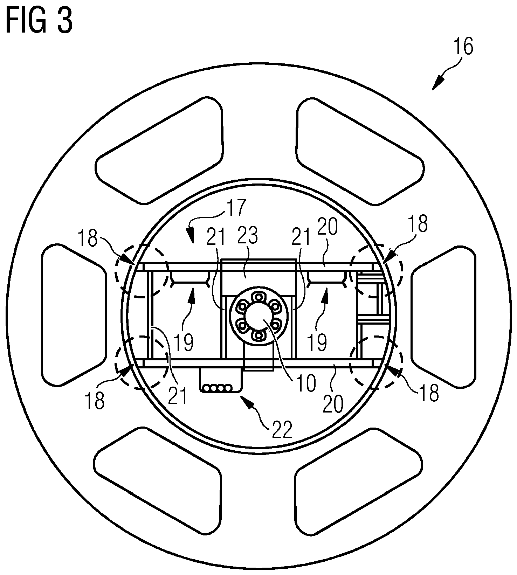

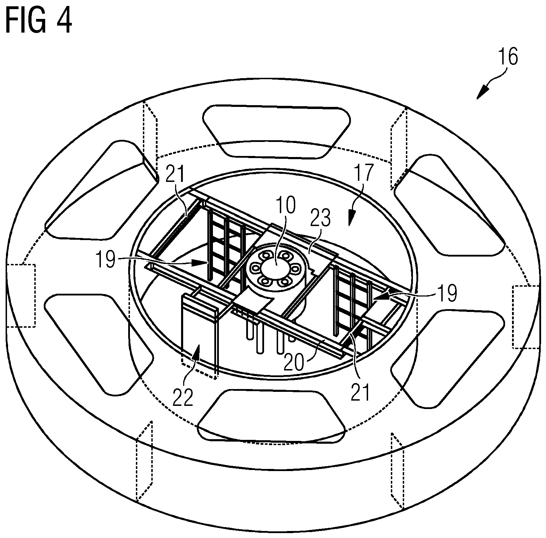

The full size damping devices 16 with the second holding structures 17 are illustrated better in fig. 3 and fig. 4.

In a lower part of the segment intermediate section 4, two first holding structures 9 are arranged, mutually spaced apart in the longitudinal direction L of the tower segment 1.

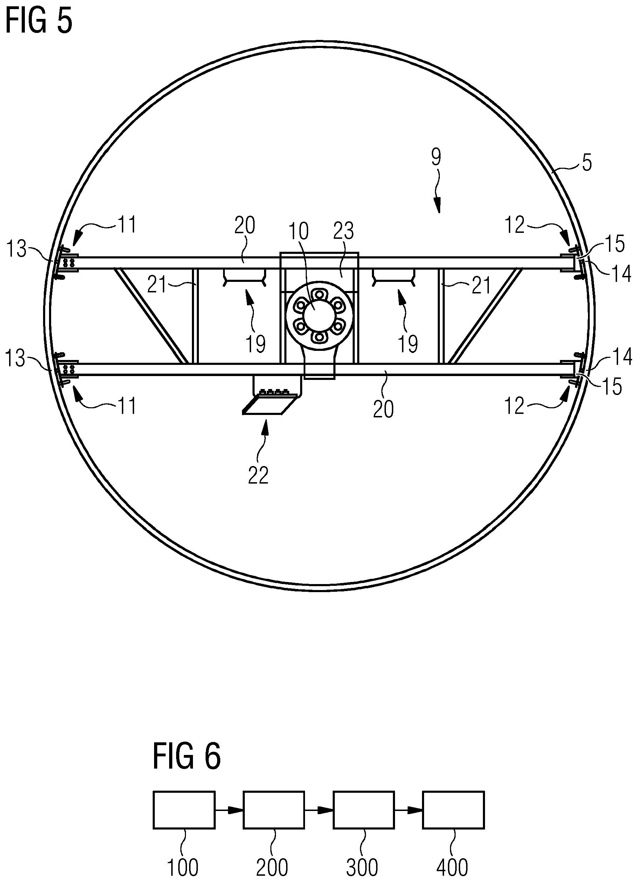

The first holding structures 9 are illustrated better in fig. 5.

A wire harness 10 and two ladders 19 are fixedly attached to the first holding structures 9 and the second holding structures 17. In this example, the wire harness 10 extends beyond the segment top end 2 and the segment bottom end 3. The ladders 19 extend from the segment top end 2 to the segment bottom end 3.

In fig. 3, the full size dampening device 16 of fig. 1 is shown in a schematic top view.

Fig. 4 shows the full size dampening device 16 of fig. 1 in a schematic perspective view.

The full size dampening device 16 has a substantially hollow-cylindrical shape. Inside the full size dampening device 16, the second holding structure 17 is arranged. In this example, the second holding structure 17 comprises two parallel arranged longitudinal bars 20, connected together by a plurality of shorter cross bars 21. The ladders 19 are fixedly attached to one of the longitudinal bars 20. The wire harness 10 is attached to both longitudinal bars 20 by a harness holding structure 23.

All four longitudinal end sections 18 of the two longitudinal bars 20 are fixedly attached to the inner wall of the full size damping device 16. At the other longitudinal bar 20, electronic components 22 are fixedly attached. Preferably, the other full size damping devices 16 with the second holding structures 17 are configured likewise.

In fig. 5, the first holding structure 9 of fig. 1 is shown in a schematic top view. The first holding structure 9 is longer than the second holding structure 17 and comprises two parallel arranged longitudinal bars 20, connected together by a plurality of shorter cross bars 21. The ladders 19 are fixedly attached to one of the longitudinal bars 20. The wire harness 10 is attached to both longitudinal bars 20 by a harness holding structure 23.

Two first longitudinal end sections 11 of the
two longitudinal bars 20 are fixedly attached to the inner wall of the tower segment shell 5. Two second longitudinal end sections 12 of the two longitudinal bars 20 are each supported by an abutment device 15. The abutment device 15 is fixedly attached to the tower segment shell 5. The abutment devices 15 are configured to hold the second longitudinal end sections 12 in a horizontal position and to allow a relative movement of the tower segment shell 5 to the
second longitudinal end sections 12, e.g., due to ovalization of the tower segment 1 during transport or storage in a horizontal position. At the other longitudinal bar 20, electronic components 22 are fixedly attached. Preferably, the other first holding structures 9 are configured likewise.

Fig. 6 shows in a schematic process chart a preferred embodiment of the method according to the invention. In a first process action 100, a plurality of tower segments 1 according to the invention is provided at a first location. The first location can be a place, where the tower segment 1 is preassembled, e.g., a factory, a workshop or the like.

In a second process action 200, the plurality of tower segments 1 is transported from the first location to a second location by a transport device, e.g., a trailer pulled by a truck, a vessel or the like. Handling the tower segments 1 at the first location and the second location is preferably done by a crane or the like. The second location is different from the first location. The second location can be a final deployment site of the wind turbine, e.g., at a wind park. A distance between the first location and the second location can be several kilometers, e.g., more than 100 kilometers.

In a third process action 300, the tower segments 1 are stacked on top of each other. Thereby, the lowest tower segment 1 can be arranged on top of a foundation of the wind turbine. A second lowest tower segment 1 is placed on top of the lowest tower segment 1 in a way that a bottom flange 8 of the second lowest tower segment 1 is facing or contacting a top flange 7 of the lowest tower segment 1 and so on. In the stacked state, the adjacent tower segments 1 are fixed together by fixation means, e.g., nuts, bolts or the like. Thus, the tower for the wind turbine is constituted.

Preferably, the ladders 19 of the adjacent tower segments 1 are arranged in line.

In a fourth process action 400, the wire harnesses 10 of the stacked tower segments 1 are electrically coupled. In other words, a free end of a lower wire harness 10 is electrically coupled to a free end of a higher wire harness 10, e.g., by electrical plugs, connector boxes, screw terminals or the like. Preferably, adjacent free ends of adjacent ladders 19 are fixed together, e.g., by welding, bushings, clamps or the like. Thus, the tower for the wind turbine is assembled with less effort at the deployment site and in less time than with conventional methods.

## Claims

1. Tower segment (1) for a tower of a wind turbine, comprising a segment top end (2), a segment bottom end (3) and a segment intermediate section (4) between the segment top end (2) and the segment bottom end (3), a tower segment shell (5) in the segment intermediate section (4), configured to shield an inner chamber (6) of the tower segment (1) from an environment of the tower, and a horizontally arranged first holding structure (9),
**characterized in**
**that** the first holding structure (9) has a first longitudinal end section (11) and a second longitudinal end section (12), wherein the first longitudinal end section (11) is fixedly attached to a first shell section (13) of the tower segment shell (5), wherein the second longitudinal end section (12) is moveably arranged at a second shell section (14) of the tower segment shell (5).

2. Tower segment (1) according to claim 1,
**characterized in**
**that** the tower segment (1) comprises a top attachment means (7), preferably a top flange (7), at the segment top end (2) and a bottom attachment means (8), preferably a bottom flange (8), at the segment bottom end (3).

3. Tower segment (1) according to claim 1 or 2,
**characterized in**
**that** the tower segment (1) further comprises a wire harness (10), arranged at the first holding structure (9) such that the first holding structure (9) guides the wire harness (10), wherein the wire harness (10) extends between the segment top end (2) and the segment bottom end (3).

4. Tower segment (1) according to any of the previous claims,
**characterized in**
**that** a plurality of first holding structures (9) is arranged inside the inner chamber (6), vertically spaced apart from each other.

5. Tower segment (1) according to any of the previous claims, **characterized in**
**that** the first shell section (13) and the second shell section (14) are arranged at opposite sides of the tower segment shell (5).

6. Tower segment (1) according to any of the previous claims, **characterized in**
**that** the second longitudinal end section (12) is vertically retained at an abutment device (15) at the second shell section (14).

7. Tower segment (1) according to claim 6,
**characterized in**
**that** the abutment device (15) is fixedly attached to the tower segment shell (5) at the second shell section (14).

8. Tower segment (1) according to claim 6 or 7,
**characterized in**
**that** the second longitudinal end section (12) is horizontally guided at the abutment device (15).

9. Tower segment (1) according to any of the previous claims, **characterized in**
**that** a damping device (16) is attached to the tower segment shell (5), preferably in a section above the first holding structure (9), wherein a second holding structure (17) is horizontally arranged inside the damping device (16), wherein a wire harness (10) is arranged at the second holding structure (17).

10. Tower segment (1) according to claim 9,
**characterized in**
**that** the second holding structure (17) comprises two opposing longitudinal end sections (18) and both opposing longitudinal end sections (18) of the second holding structure (17) are fixedly attached to the damping device (16).

11. Tower segment (1) according to any of the previous claims,
**characterized in**
**that** the tower segment (1) comprises a ladder and the ladder (19) is supported by the first holding structure (9), wherein the ladder (19) extends between the segment top end (2) and the segment bottom end (3).

12. Method for manufacturing a tower of a wind turbine, the method comprising:
- providing at least one tower segment (1) according to any of the previous claims, and
- stacking and joining the at least one tower segment (1) with at least one additional tower segment.

13. Method for manufacturing a tower of a wind turbine according to claim 12, wherein each stacked tower segment (1) comprises a wire harness (10) and the method further comprises electrically coupling the wire harnesses (10) of the stacked tower segments (1).
